# EUROPEAN PATENT SPECIFICATION

(11) **EP 2 461 054 B1**
(45) Date of publication and mention of the grant of the patent: **22.06.2016**
(21) Application number: 10804228.4
(22) Date of filing: 06.07.2010
(51) Int. Cl.: F16C 33/10, F16C 17/02, F16C 17/24, F16C 9/04

(54) **BEARING DEVICE**
LAGERVORRICHTUNG
DISPOSITIF DE PALIER

(30) Priority: 29.07.2009 JP 2009176522
(43) Date of publication of application: 06.06.2012
(73) Proprietor: Taiho Kogyo Co., Ltd, Toyota-shi Aichi 471-8502 (JP)
(72) Inventor: KONDO Masaru, Toyota-shi Aichi 471-8502 (JP); WATANABE Kenji, Toyota-shi Aichi 471-8502 (JP); TAGUCHI Yukiyasu, Toyota-shi Aichi 471-8502 (JP)
(74) Representative: Cabinet Plasseraud
(86) International application number: PCT/JP2010/061437
(87) International publication number: WO 2011/013481

(56) References cited:
- GB-A- 1 144 131
- JP-A- 2003 120 648
- JP-A- 2008 215 563
- JP-U- H01 154 323
- JP-U- H02 116 017
- US-A- 2 544 913

## Description

### Technical Field

The present invention relates to a bearing apparatus and, in particular, to a bearing apparatus including a sliding bearing capable of smoothly discharging foreign particles.

### Background Art

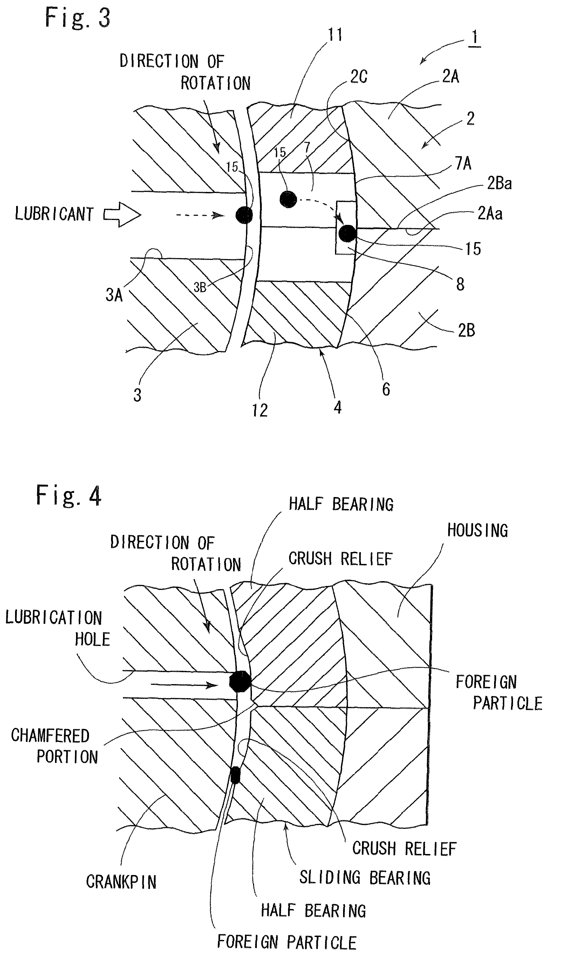

A sliding bearing which is constructed by joining a pair of half bearings together into a cylinder and has a chamfer and a crush relief in an inner circumferential portion of the joining surface of each of the half bearings has been well known (See Figure 4). The sliding bearing including the crush relief that is a notch is designed so that foreign particles contained in a lubricant supplied through a lubrication hole in a crankpin are trapped by the crush relief and then discharged to the outside the sliding bearing through an opening between the edges that are sides of the crush relief and a chamfered portion.

Sliding bearings have been proposed in which circumferential grooves or radial grooves are formed in the back surface (outer circumferential surface) of the sliding bearings in order to improve the lubricity of sliding surfaces (for example Patent Literatures 1 to 3).

### Prior Art Documents

### Patent Literature

Patent Literature 1: Japanese Patent Application Laid-Open No. 61-228117
Patent Literature 2: Japanese Patent Application Laid-Open No. 64-21811
Patent Literature 3: Japanese Patent Application Laid-Open No. 2-117425

Document JPH01154323U discloses a bearing apparatus comprising the features of the preamble of claim 1.

Document US2544913A discloses a bearing apparatus comprising the features of the preamble of claim 10.

### Summary of the Invention

### Problems to be Solved by the Invention

The conventional sliding bearing illustrated in Figure 4 has had the drawback that foreign particles trapped by the crush relief are caught back by the sliding surface and damage the sliding surface because foreign particles contained in the lubricant are first trapped by the crush relief and then discharged to the outside.

In the sliding bearings in Patent Literatures 1 and 2, on the other hand, foreign particles contained in a lubricant have been not smoothly discharged because circumferential recesses or linear grooves are provided in the outer circumferential surfaces to allow foreign particles to deposit in the recesses or grooves.

The sliding bearing in Patent Literature 3 has an axial groove provided in the outer circumferential surface of the sliding bearing and includes a radial through hole leading from the axial groove. However, the sliding bearing in Patent Literature 3 is designed so that the whole sliding bearing is immersed in a lubricant and therefore supply of a lubricant through a lubrication hole in a rotating shaft, foreign particles in the lubricant, and the locations of the radial through hole were not taken into consideration.

### Means for Solving the Problems

In light of the circumstances described above, a first invention provides a bearing apparatus including a rotating shaft having an end of a lubrication hole opened in an outer circumferential surface, a cylindrical sliding bearing rotatably supporting the rotating shaft, and a housing holding the sliding bearing, wherein, a through hole is formed along a radial direction at a predetermined position in the sliding bearing so that the through hole coincides with the trajectory of movement of an end of the lubrication hole when the rotating shaft is rotated, and a foreign particle discharge groove is formed in an outer circumferential surface of the sliding bearing, the foreign particle discharge groove leading to the through hole and passing through along an axial direction.

A second invention provides a bearing apparatus including a rotating shaft having an end of a lubrication hole opened in an outer circumferential surface, a cylindrical sliding bearing rotatably supporting the rotating shaft, and a housing holding the sliding bearing from an outer circumferential side, wherein, the sliding bearing is formed in the shape of a cylinder by joining joining surfaces of a pair of semicylindrical half bearings together, and the through hole is formed in the joining surfaces, the through hole passing through in a radial direction, and a foreign particle discharge groove is formed in an inner circumferential surface of the housing, the foreign particle discharge groove leading to an opening of the through hole on the outer circumference side and passing through the inner circumferential surface along an axial direction.

### Advantageous Effects of the Invention

According to the configurations described above, foreign particles contained in a lubricant are trapped in the through hole, then pass through the through hole and are discharged to the outside the sliding bearing through the foreign particle discharge groove and the opening at the edges of the sliding bearing. Thus, a bearing apparatus including a sliding bearing that smoothly discharges foreign particles can be provided.

### Brief Description of the Drawings

[Figure 1] Figure 1 is a cross-sectional view of a bearing apparatus illustrating one embodiment of the present invention.
[Figure 2] Figure 2 is an enlarged perspective view of a substantial part of the sliding bearing illustrated in Figure 1.
[Figure 3] Figure 3 is a schematic diagram illustrating the part illustrated in Figure 2 into which a lubricant containing foreign particles has been supplied.
[Figure 4] Figure 4 is a cross-sectional view illustrating a substantial part of a conventional bearing apparatus.
[Figure 5] Figure 5 is a diagram showing the results and the conditions of a test of foreign particle discharge capability of the conventional bearing apparatus illustrated in Figure 4 and the inventive bearing apparatus illustrated in Figure 2.
[Figure 6] Figure 6 illustrates a second embodiment of the present invention, wherein Figure 6(a) is a perspective view of a substantial part of the second embodiment and Figure 6(b) is a schematic diagram illustrating the part illustrated in Figure 6(a) into which a lubricant containing foreign particles has been supplied.
[Figure 7] Figure 7 illustrates another embodiment of the present invention, wherein Figure 7(a) is a perspective view of a substantial part of the embodiment and
Figure 7(b) is a schematic diagram illustrating the part illustrated in Figure 7(a) into which a lubricant containing foreign particles has been supplied.
[Figure 8] Figure 8 illustrates an example of a bearing apparatus not comprised by the present invention, wherein Figure 8(a) is a perspective view of a substantial part of the example and Figure 8 (b) is a schematic diagram illustrating the part illustrated in Figure 8(a) into which a lubricant containing foreign particles has been supplied.
[Figure 9] Figure 9 illustrates a further example of a bearing apparatus not comprised by the present invention, wherein Figure 9(a) is a perspective view of a substantial part of the example and Figure 9(b) is a schematic diagram illustrating the part illustrated in Figure 9(a) into which a lubricant containing foreign particles has been supplied.
[Figure 10] Figure 10 illustrates a further embodiment of the present invention, wherein Figure 10(a) is a perspective view of a substantial part of the embodiment and Figure 10(b) is a schematic diagram illustrating the part illustrated in Figure 10(a) into which a lubricant containing foreign particles has been supplied.
[Figure 11] Figure 11 illustrates a further embodiment of the present invention, wherein Figure 11(a) is a perspective view of a substantial part of the embodiment and Figure 11(b) is a schematic diagram illustrating the part illustrated in Figure 11(a) into which a lubricant containing foreign particles has been supplied.
[Figure 12] Figure 12 illustrates a further embodiment of the present invention, wherein Figure 12(a) is a perspective view of a substantial part of the embodiment and Figure 12(b) is a schematic diagram illustrating the part illustrated in Figure 12(a) into which a lubricant containing foreign particles has been supplied.
[Figure 13] Figure 13 is a cross-sectional view illustrating another embodiment of the present invention.

### Mode for Carrying out the Invention

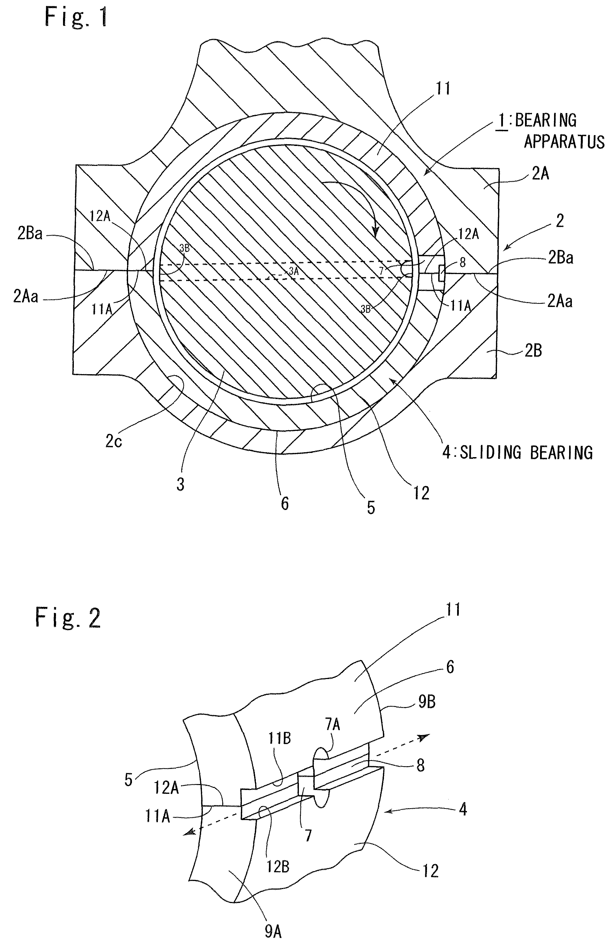

The present invention will be described below with embodiments illustrated in the drawings. A bearing apparatus 1 in Figures 1 and 2 includes a substantially cylindrical base 2 in a con-rod and a cylindrical sliding bearing 4 which is held by the inner circumferential surface of the base 2 and rotatably supports a crankpin 3.

The base 2, which serves as a housing supporting the sliding bearing 4, is made up of a semicylindrical upper housing 2A formed at the lower end of the body of the con-rod and a semicylindrical cap 2B, which is joined to the upper housing 2A from below and serves as a lower housing. The upper housing 2A and the cap 2B are joined together with bolts, not shown, with a joining surface 2Aa of the upper housing 2A and a joining surface 2Ba of the cap 2B being butted onto each other. The outer circumferential surface of the sliding bearing 4 is held by the inner circumferential surfaces 2C of the both members thus joined.

As illustrated in Figures 1 to 3, the sliding bearing 4 is made up of a pair of upper and lower semicylindrical half bearings 11 and 12 and joining surfaces 11A and 12A of the half bearings 11 and 12 are joined together to form a cylinder. The sliding bearing 4 rotatably supports the crankpin 3 (rotating shaft) of a crankshaft with a sliding surface 5 which is the inner circumferential surfaces of the half bearings 11 and 12. The outer circumferential surface 6 which is the back surfaces of the half bearings 11 and 12 is held by the base 2 serving as a housing of the con-rod.

When a lubricant is pumped from an oil pump, not shown, toward the crankshaft, the lubricant is supplied into a lubricant path, not shown, provided in the crankshaft and into a lubrication hole 3A in the crankpin 3 which is connected to the lubricant path. An end 3B of the lubrication hole 3A is opened at a predetermined location in the outer circumferential surface of the crankpin 3. Accordingly, the lubricant supplied into the lubrication hole 3A is fed from the end 3B of the lubrication hole 3A to the sliding surface 5 of the sliding bearing 4 as the crankpin 3 is rotated in the direction indicated by the arrow. Consequently, the sliding surface 5 of the sliding bearing 4 is lubricated.

In this embodiment, a through hole 7 that passes through in the radial direction is provided at the position of the joining surfaces 11A and 12A of the sliding bearing 4 and a foreign particle discharge groove 8 is provided in the outer circumferential surface 6 in the axial direction leading from an opening 7A of the through hole 7 on the outer circumferential surface 6 side, so that foreign particles 15 contained in the lubricant can be efficiently discharged to the outside the sliding bearing 4.

Specifically, the through hole 7 which has a circular cross section and radially passes through is provided at the position of the joining surfaces 11A and 12A on one side of the half bearings 11 and 12 in such a manner that the center of the axis of the through hole 7 is aligned with the joining surfaces 11A and 12A. The through hole 7 is formed in the center in the direction of the axis of the sliding bearing 4. The inner diameter of the through hole 7 is chosen such that the largest foreign particles 15 assumed to be contained in the lubricant can pass through the through hole 7.

The through hole 7 is formed at a location which coincides with the trajectory of movement of the end 3B of the lubrication hole 3A as the crankpin 3, which is a rotating shaft, rotates in the direction indicated by the arrow. Accordingly, the lubricant is supplied directly from the lubrication hole 3A in the crankpin 3 into the through hole 7 as the crankpin 3 rotates in the direction indicate by the arrow as illustrated in Figures 1 and 3.

Furthermore, opposed linear notches 11B and 12B opened at both edges 9A and 9B are formed in the outer circumferential edge along the axial direction in the joining surfaces 11A and 12A. The internal space inside the notches 11B and 12B forms the foreign particle discharge groove 8.

The inner diameter of the through hole 7 is larger than the inner diameter of the lubrication hole 3A of the crankpin 3 and the width of the foreign particle discharge groove 8 formed by both notches 11B and 12B is chosen to be approximately equal to the inner diameter of the through hole 7. The depth of the foreign particle discharge groove 8 is chosen such that the largest foreign particles 15 assumed can pass through the groove 8.

The outer side of the foreign particle discharge groove 8 in the radial direction in this embodiment is covered with the inner circumferential surface 2C of the base 2, so that the foreign particle discharge groove 8 functions as a foreign particle discharge path that leads from the through hole 7 and is opened at both edges 9A and 9B.

As has been descried above, the sliding bearing 4 of the bearing apparatus 1 of this embodiment includes the radial through hole 7 and the foreign particle discharge groove 8 in the outer circumferential surface 6 that leads to the through hole 7, so that when the end 3B of the lubrication hole 3A coincides with the through hole 7 during rotation of the crankpin 3, a lubricant supplied through the lubrication hole 3A is directly supplied into the through hole 7 as illustrated in Figures 1 and 3. Therefore, foreign particles 15 contained in the lubricant are trapped in the through hole 7 together with the lubricant and are then discharged to the outside the sliding bearing 4 through the openings of the edges 9A and 9B.

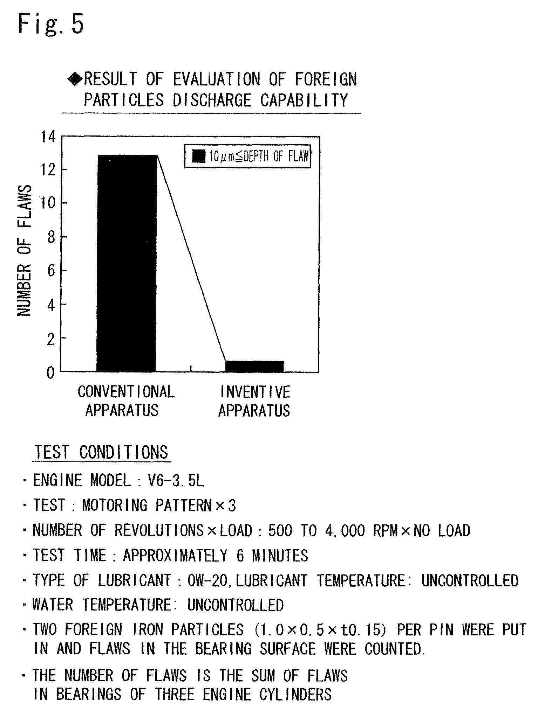

Figure 5 shows comparison of results of a test of foreign particle discharge capabilities of the inventive bearing apparatus illustrated in Figures 1 to 3 and the conventional bearing apparatus including the crush relief and the chamfer illustrated in Figure 4.

Here, the diameter of the through hole in the present invention illustrated in Figure 2 is chosen to be 4 mm, the depth of the foreign particle discharge groove is chosen to be 0.3 mm, and the width is chosen to be 2 mm.

The right-hand part of Figure 5 shows the conditions under which the test was conducted. Here, two foreign iron particles with predetermined dimensions (1.0 mm * 0.5 mm * t0.15 mm) were put in a lubricant to be supplied through the lubrication hole 3A of the crankpin 3 per clamp pin of the crank shaft and the lubricant was supplied to the sliding surface of the sliding bearing 4. Flaws caused in the sliding surface of each sliding bearing that were greater than or equal to 10 µm were counted. The results are shown in the left-hand part of Figure 5.

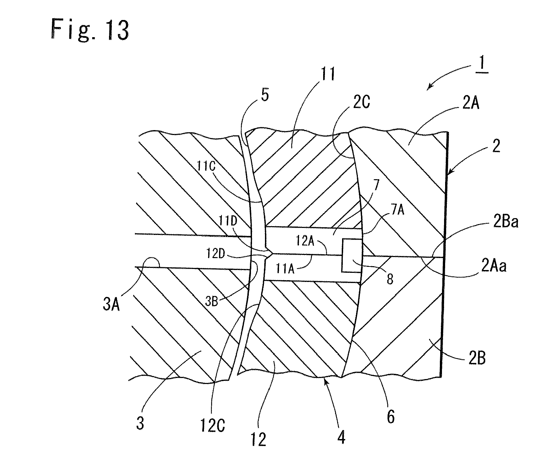

As can be seen from the results of the test in Figure 5, 13 flaws were caused in the conventional sliding bearing whereas less than two flaws were caused in the inventive sliding bearing 1. Thus, it can be appreciated that the inventive sliding bearing 4 has a far higher foreign particle discharge capability than the conventional sliding bearing.

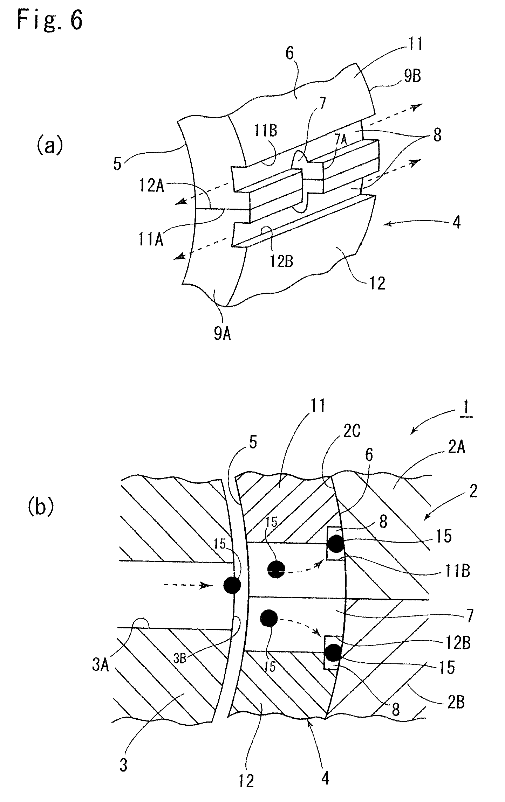

Figure 6 illustrates a second embodiment of the present invention. In the second embodiment, a foreign particle discharge groove 8 is made of a pair of upper and lower linear grooves 11B and 12B separated from each other. Specifically, a pair of linear grooves 11B and 12B are formed in the outer circumferential surface 6 of the sliding bearing 4 along the axial direction across the upper and lower ends of an opening 7A of the through hole 7 in such a manner that the grooves 11B and 12B are separated from each other as illustrated in Figure 6(a). The width and depth of each of the linear grooves 11B and 12B are chosen such that foreign particles 15 having assumed sizes can smoothly pass through the grooves 11B and 12B. The rest of the configuration is the same as the first embodiment described above.

The second embodiment having the configuration described above can provide the same operations and advantageous effects as the first embodiment.

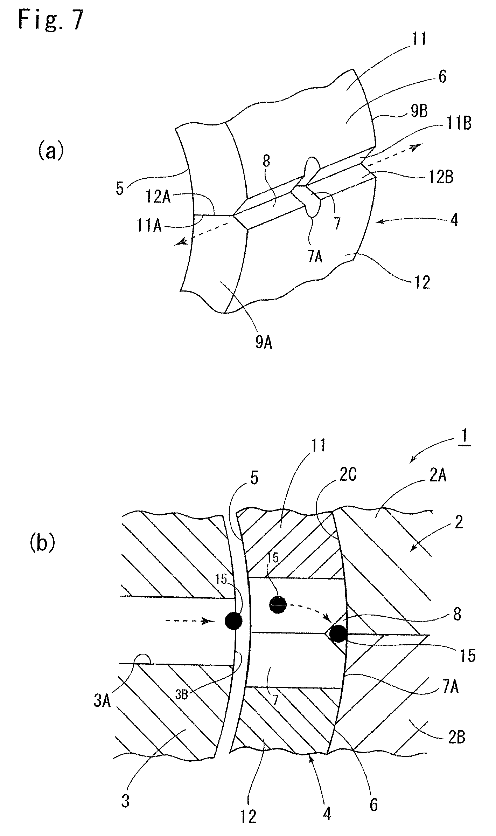

Figure 7 illustrates a third embodiment of the present invention. In the third embodiment, chamfered portion 11B and 12B are formed at the outer circumferential edges of the joining surfaces, instead of the notches 11B and 12B of the first embodiment, and a foreign particle discharge groove 8 is formed by an axial linear groove formed by the chamfered portions 11B and 12B. The rest of the configuration is the same as that of the first embodiment.

The third embodiment having the configuration described above can provide the same operations and advantageous effects as the first embodiment described above.

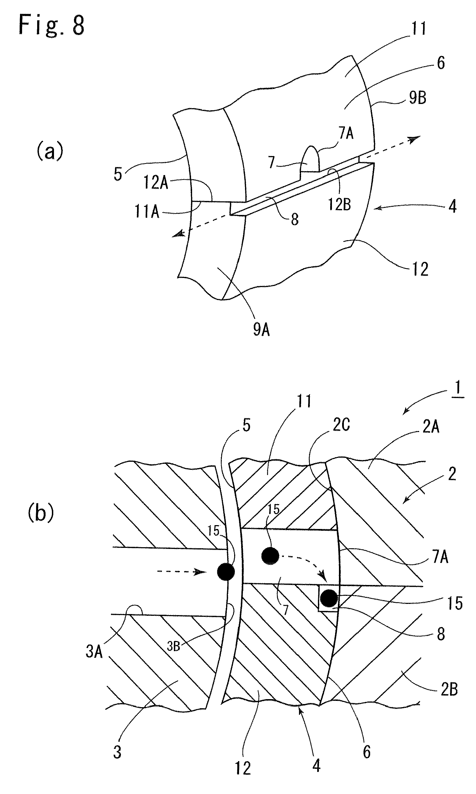

Figure 8 illustrates an example of a bearing apparatus not comprised by the present invention. In the example a through hole 7 having a semicircular cross section is formed in the upper joining surface 11A and a notch 12B similar to that in the first embodiment is formed in the outer circumferential edge of the lower joining surface 12A. The notch 12B and the upper joining surface 11A facing the notch 12B form an axial foreign particle discharge groove 8. The foreign particle discharge groove 8 leads to an opening 7A of the through hole 7. The rest of the configuration is the same as that of the first embodiment described above.

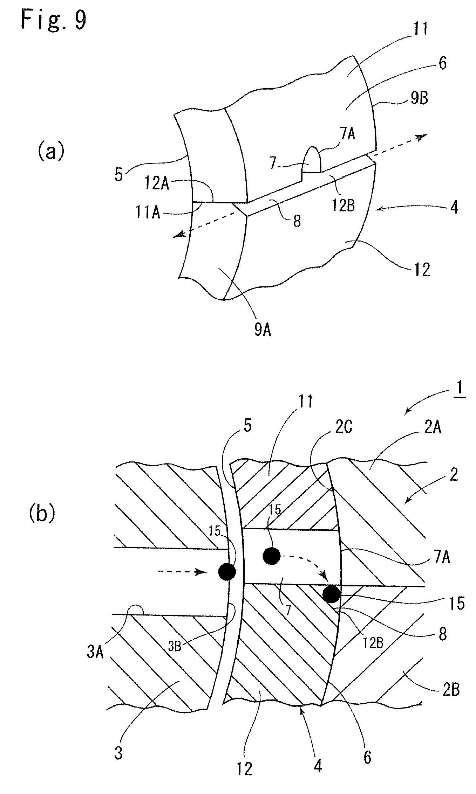

Figure 9 illustrates another example of bearing apparatus not comprised by the present invention. In this example, a through hole 7 having a semicircular cross section that is similar to the one illustrated in Figure 8 is formed in the upper joining surface 11A and a chamfered portion 12B is formed at the outer circumferential edge of the lower joining surface 12A. The chamfered portion 12B and the upper joining surface 11A facing the chamfered portion 12B form a foreign particle discharge groove 8. The discharge groove 8 leads to an opening 7A of the through hole 7.

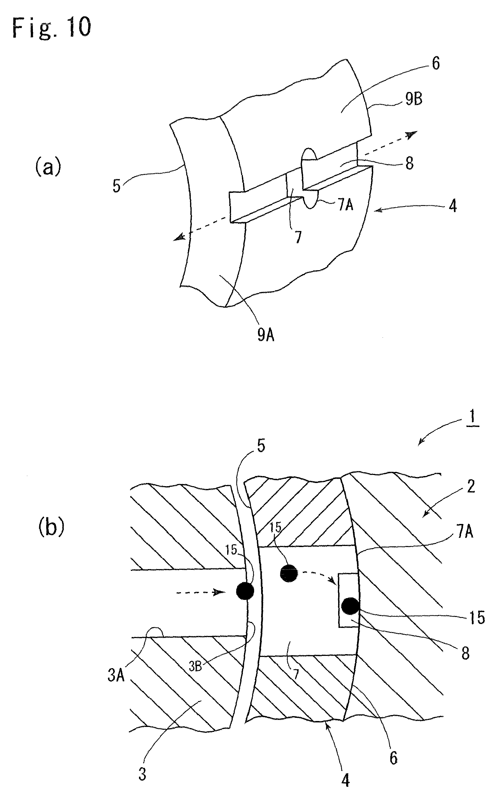

Figure 10 illustrates a further embodiment of the present invention. The sliding bearings 4 in the first to third embodiments described above are formed by a pair of half bearings 11 and 12 and the through hole 7 and the foreign particle discharge groove 8 are formed at the location of or near the joining surfaces 11A and 12A. In the embodiment of figure 10, the present invention is applied to a monolithic sliding bearing 4 formed in the shape of a cylinder. Specifically, a through hole 7 that passes through in the radial direction from the sliding surface 5 to the outer circumferential surface 6 is formed in a predetermined position in the circumferential direction in the sliding bearing 4. An axial linear groove is formed in the outer circumferential surface 6 at right angles to an outer opening 7A of the through hole 7. The linear groove constitutes a foreign particle discharge groove 8.

The through hole 7 is formed at a position that coincides with the trajectory of movement of an end 3B of a lubrication hole 3A when a crankpin 3 is rotated, as in the first embodiment. The diameter of the through hole 7 is chosen such that foreign particles 15 can smoothly pass through the through hole 7 as in the first embodiment. The width and depth of the foreign particle discharge groove 8 are similar to those of the foreign particle discharge groove 8 in the first embodiment. The rest of the configuration is the same as that of the first embodiment.

The embodiment of figure 10 having the configuration descried above can provide the same operations and advantageous effects as the first embodiment described above.

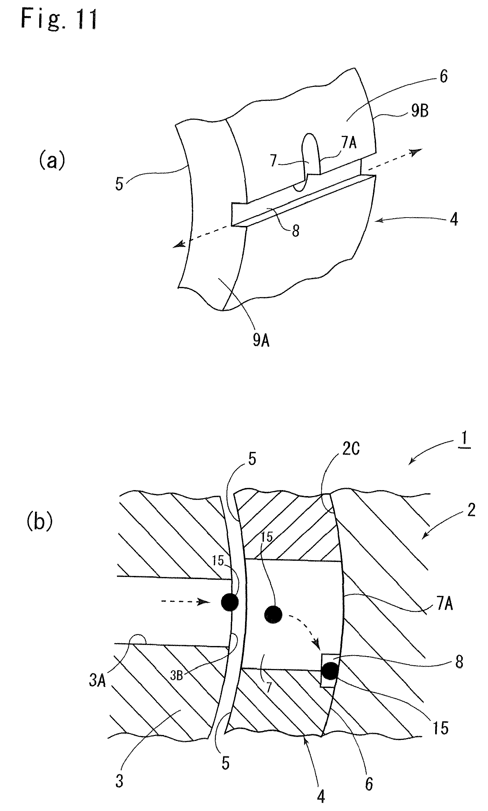

Figure 11 illustrates a further embodiment of the present invention. In this embodiment, a foreign particle discharge groove 8 is provided at a position slightly lower than the position of the foreign particle discharge groove 8 in the embodiment of figure 10. Specifically, the foreign particle discharge groove 8 is formed in the outer circumferential surface 6 along the axial direction so that the upper edge of the foreign particle discharge groove 8 coincides with the lower end of an outer opening 7A of a through hole 7. The rest of the configuration is the same as that of the embodiment illustrated in Figure 10.

The embodiment of figure 11 having the configuration descried above can provide the same operations and advantageous effects as the first embodiment described above.

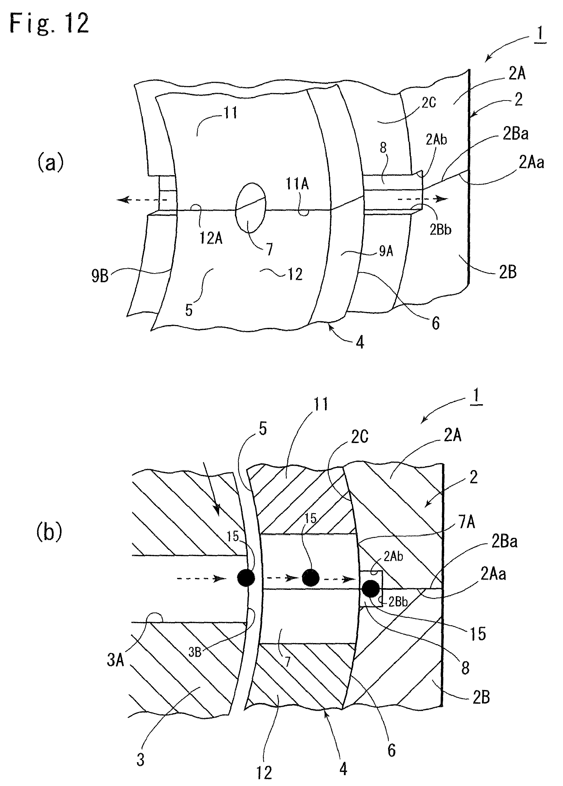

Figure 12 illustrates a further embodiment of the present invention. In this embodiment, the foreign particle discharge groove 8 in the outer circumferential surface 6 of the sliding bearing 4 in the first embodiment is omitted and instead, a foreign particle discharge groove 8 is formed in the inner circumferential surface 2C of the base 2 on the con-rod side.

Specifically, a pair of axial linear notches 2Ab and 2Bb are formed in the inner circumferential edges of joining surfaces 2Aa and 2bA of the base 2 so that the notches 2Aa and 2Bb coincide with an opening 7A of a through hole 7 of the sliding bearing 4. The inner space inside the two notches 2Aa and 2Bb constitutes a foreign particle discharge groove 8. In this embodiment having the configuration described above, foreign particles 15 trapped in the through hole 7 of the sliding bearing 4 are discharged to the outside the sliding bearing 4 through the foreign particle discharge groove 8 provided in the base 2 which leads to the through hole 7. While the discharge groove is illustrated as being rectangular in Figure 12, the discharge groove may have a chamfered shape as in Figure 7.

The embodiment of figure 12 having the configuration descried above can provide the same operations and advantageous effects as the first embodiment described above.

Figure 13 illustrates yet another embodiment of the present invention. In this embodiment, a through hole 7 along the radial direction and a foreign particle discharge groove 8 leading to the through hole 7 are formed as in the first embodiment in a sliding bearing 4 in which crush reliefs 11C and 12C are formed by notches in a sliding surface 5 on the inner side of joining surfaces 11A and 12A of the half bearings 11 and 12 and chamfered portions 11D and 12D are formed at the inner edges of the joining surfaces 11A an 12A.

In this way, a through hole 7 and a foreign particle discharge groove 8 that leads to the through hole 7 as in the embodiments in Figure 2, 6, 7 and Figures 10 to 12 may be formed in a well-known conventional sliding bearing 4 including crush reliefs 11C and 12C and chamfered portions 11D and 12D.

While the embodiments have been described in which the present invention is applied to a con-rod bearing apparatus 1, the present invention is also applicable to a main bearing which supports a crankshaft on the cylinder block side. In that case, the cylinder block serves as the housing holding the sliding bearing.

### Reference Signs List

1 ... Bearing apparatus
2 ... Base (Housing)
3 ... Crankpin (Rotating shaft)
3A ... Lubrication hole
4 ... Sliding bearing
6 ... Outer circumferential surface
7 ... Through hole
8 ... Foreign particle discharge groove
11 ... Half bearing
12 ... Half bearing
15 ... Foreign particle

## Claims

1. A bearing apparatus (1) comprising a rotating shaft (3) having an end of a lubrication hole (3A) opened in an outer circumferential surface (6), a cylindrical sliding bearing (4) rotatably supporting the rotating shaft (3), and a housing holding the sliding bearing (4), wherein:
a through hole (7) is formed along a radial direction at a predetermined position in the sliding bearing (4) so that the through hole (7) coincides with the trajectory of movement of an end of the lubrication hole (3A) when the rotating shaft (3) is rotated; and
a foreign particle discharge groove (8) is formed in an outer circumferential surface (6) of the sliding bearing (4),
**characterized in that**:
- the foreign particle discharge groove (8) leads to the through hole (7) and passes through along an axial direction; and
- the inner diameter of the through hole (7) of the sliding bearing (4) is larger than the inner diameter of the lubrication hole (3A) of the rotating shaft (3).

2. The bearing apparatus (1) according to claim 1, wherein the sliding bearing (4) is formed in the shape of a cylinder by joining surfaces (11A, 12A) of a pair of half bearings (11,12) together and the through hole (7) is formed at and around the joining surfaces (11A, 12A) of the half bearings.

3. The bearing apparatus (1) according to claim 2, wherein:
a notch is formed along an axial direction in an outer circumferential surface (6) of each of the half bearings (11,12), the outer circumferential surface (6) being the outer circumferential edge of each of the joining surfaces (11A, 12A); and
the notches form the foreign particle discharge groove (8).

4. The bearing apparatus (1) according to claim 2, wherein:
a linear groove (11B, 12B) extending in the axial direction is formed in the outer circumferential surface (6) of each of the half bearings (11,12), the linear grooves (11B, 12B) being separated from the outer circumferential edges of the joining surfaces; and
the linear grooves (11B, 12B) form the foreign particle discharge groove (8).

5. The bearing apparatus (1) according to claim 2, wherein:
a chamfered portion is formed in the outer circumferential surface (6) of each of the half bearings (11,12), the outer circumferential surface (6) being the outer circumferential edge of each of the joining surfaces; and
the chamfered portions form the foreign particle discharge groove (8).

6. The bearing apparatus (1) according to claim 1, wherein the sliding bearing (4) is formed in the shape of a cylinder by joining joining surfaces (11A, 12A) of a pair of half bearings (11,12)together, the through hole is formed in only one of the half bearings (11,12)that is adjacent to the joining surfaces (11A, 12A).

7. The bearing apparatus (1) according to claim 6, wherein the through hole (7) is formed in one of the half bearings (11,12), a notch is formed in the outer circumferential edge of the joining surface of the other of the half bearings along the axial direction, and the notch and the other joining surface facing the notch form the foreign particle discharge groove(8).

8. The bearing apparatus (1) according to claim 6, wherein the through hole (7) is formed in one of the half bearings (11,12), a chamfered portion is formed in the outer circumferential edge of the joining surface of the other of the half bearings along the axial direction, and the chamfered portion and the other joining surface facing the chamfered portion form the foreign particle discharge groove(8).

9. The bearing apparatus (1) according to any of claims 2 to 8, wherein:
a crush relief is formed in a position in an inner circumferential surface (2C) of each of the half bearings (11,12), the position being adjacent to the joining surfaces (11A, 12A); and
a chamfered portion is formed in the inner circumferential edge of each of the joining surfaces.

10. A bearing apparatus (1) comprising a rotating shaft having an end of a lubrication hole (3A) opened in an outer circumferential surface, a cylindrical sliding bearing (4) rotatably supporting the rotating shaft(3), and a housing holding the sliding bearing (4) from an outer circumferential side, wherein:
the sliding bearing (4) is formed in the shape of a cylinder by joining joining surfaces (11A, 12A) of a pair of semicylindrical half bearings (11,12) together; and
the through hole (7) is formed in the joining surfaces (11A, 12A), the through hole (7) passing through in a radial direction, and a foreign particle discharge groove (8) is formed in an inner circumferential surface (2C) of the housing, the foreign particle discharge groove (8) leading to an opening (7A) of the through hole (7) on the outer circumference side and passing through the inner circumferential surface (2C) along an axial direction.
**characterised in that**
the through hole (7) is formed in the center in the direction of the axis of the sliding bearing (4) and the foreign particle discharge groove (8) is continuously formed.

11. The bearing apparatus (1) according to claim 10, wherein a crush relief is formed at a position in an inner circumferential surface of each of the half bearings (11,12), the position being adjacent to the joining surfaces (11A, 12A); and a chamfered portion is formed in an inner circumferential edge of each of the joining surfaces (11A, 12A).

## Patentansprüche

1. Lagervorrichtung (1), umfassend eine rotierende Welle (3) mit einem Ende eines Schmierloches (3A), welches in einer äußeren Umfangsfläche (6) geöffnet ist, ein zylindrisches Gleitlager (4), welches die rotierende Welle (3) rotierbar haltert, und ein Gehäuse, welches das Gleitlager (4) hält, wobei:
ein Durchgangsloch (7) entlang einer radialen Richtung an einer vorbestimmten Position in dem Gleitlager (4) derart ausgebildet ist, dass das Durchgangsloch (7) mit der Bewegungstrajektorie eines Endes des Schmierloches (3A) zusammenfällt, wenn die rotierende Welle (3) rotiert wird; und
eine Fremdpartikel-Austrittsnut (8) in einer äußeren Umfangsfläche (6) des Gleitlagers (4) ausgebildet ist,
**dadurch gekennzeichnet, dass**:
- die Fremdpartikel-Austrittsnut (8) zu dem Durchgangsloch (7) führt und entlang einer axialen Richtung hindurchtritt; und
- der Innendurchmesser des Durchgangsloches (7) des Gleitlagers (4) größer als der Innendurchmesser des Schmierloches (3A) der rotierenden Welle (3) ist.

2. Lagervorrichtung (1) nach Anspruch 1, wobei das Gleitlager (4) durch Verbindungsflächen (11A, 12A) eines Paares von halben Lagern (11, 12) zusammen in der Form eines Zylinders ausgebildet ist und das Durchgangsloch (7) an den und um die Verbindungsflächen (11A, 12A) der halben Lager ausgebildet ist.

3. Lagervorrichtung (1) nach Anspruch 2, wobei:
eine Kerbe entlang einer axialen Richtung in einer äußeren Umfangsfläche (6) von jedem der halben Lager (11,12) ausgebildet ist, wobei die äußere Umfangsfläche (6) der äußere Umfangsrand von jeder der Verbindungsflächen (11A, 12A) ist; und
die Kerben die Fremdpartikel-Austrittsnut (8) bilden.

4. Lagervorrichtung (1) nach Anspruch 2, wobei:
eine sich in die axiale Richtung erstreckende lineare Nut (11 B, 12B) in der äußeren Umfangsfläche (6) von jedem der halben Lager (11, 12) ausgebildet ist, wobei die linearen Nuten (11 B, 12B) von den äußeren Umfangsrändern der Verbindungsflächen getrennt sind; und
die linearen Nuten (11 B, 12B) die Fremdpartikel-Austrittsnut (8) bilden.

5. Lagervorrichtung (1) nach Anspruch 2, wobei:
ein gefaster Abschnitt in der äußeren Umfangsfläche (6) von jedem der halben Lager (11, 12) ausgebildet ist, wobei die äußere Umfangsfläche (6) der äußere Umfangsrand von jeder der Verbindungsflächen ist; und
die gefasten Abschnitte die Fremdpartikel-Austrittsnut (8) bilden.

6. Lagervorrichtung (1) nach Anspruch 1, wobei das Gleitlager (4) durch verbundene Verbindungsflächen (11A, 12A) von einem Paar von halben Lagern (11, 12) zusammen in der Form eines Zylinders ausgebildet ist, wobei das Durchgangsloch in nur einem der halben Lager (11, 12), welches zu den Verbindungsflächen (11A, 12A) benachbart ist, ausgebildet ist.

7. Lagervorrichtung (1) nach Anspruch 6, wobei das Durchgangsloch (7) in einem der halben Lager (11, 12) ausgebildet ist, wobei eine Kerbe in dem äußeren Umfangsrand der Verbindungsfläche von dem anderen der halben Lager entlang der axialen Richtung ausgebildet ist, und wobei die Kerbe und die andere Verbindungsfläche, welche der Kerbe zugewandt ist, die Fremdpartikel-Austrittsnut (8) bildet.

8. Lagervorrichtung (1) nach Anspruch 6, wobei das Durchgangsloch (7) in einem der halben Lager (11, 12) ausgebildet ist, wobei ein gefaster Abschnitt in dem äußeren Umfangsrand der Verbindungsfläche des anderen der halben Lager entlang der axialen Richtung ausgebildet ist, und wobei der gefaste Abschnitt und die andere Verbindungsfläche, welche dem gefasten Abschnitt zugewandt ist, die Fremdpartikel-Austrittsnut (8) bilden.

9. Lagervorrichtung (1) nach einem der Ansprüche 2 bis 8, wobei:
eine Quetschentlastung in einer Position in einer inneren Umfangsfläche (2C) von jedem der halben Lager (11, 12) ausgebildet ist, wobei die Position zu den Verbindungsflächen (11A, 12A) benachbart ist; und
ein gefaster Abschnitt in dem inneren Umfangsrand von jeder der Verbindungsflächen ausgebildet ist.

10. Lagervorrichtung (1), umfassend eine rotierende Welle mit einem Ende eines Schmierloches (3A), welches in einer äußeren Umfangsfläche geöffnet ist, ein zylindrisches Gleitlager (4), welches die rotierende Welle (3) rotierbar haltert, und ein Gehäuse, welches das Gleitlager (4) von einer äußeren Umfangsseite hält, wobei:
das Gleitlager (4) durch verbundene Verbindungsflächen (11A, 12A) von einem Paar von halbzylindrischen halben Lagern (11, 12) zusammen in der Form eines Zylinders ausgebildet ist; und
das Durchgangsloch (7) in den Verbindungsflächen (11A, 12A) ausgebildet ist, wobei das Durchgangsloch (7) in einer radialen Richtung hindurchtritt und eine Fremdpartikel-Austrittsnut (8) in einer inneren Umfangsfläche (2C) des Gehäuses ausgebildet ist, wobei die Fremdpartikel-Austrittsnut (8) zu einer Öffnung (7A) des Durchgangsloches (7) an der äußeren Umfangsseite führt und die innere Umfangsfläche (2C) entlang einer axialen Richtung durchtritt, **dadurch gekennzeichnet, dass**
das Durchgangsloch (7) in dem Zentrum in der Richtung der Achse des Gleitlagers (4) ausgebildet ist und
die Fremdpartikel-Austrittsnut (8) kontinuierlich ausgebildet ist.

11. Lagervorrichtung (1) nach Anspruch 10, wobei eine Quetschentlastung an einer Position in einer inneren Umfangsfläche von jedem der halben Lager (11, 12) ausgebildet ist, wobei die Position zu den Verbindungsflächen (11A, 12A) benachbart ist; und wobei ein gefaster Abschnitt in einem inneren Umfangsrand von jeder der Verbindungsflächen (11A, 12A) ausgebildet ist.

## Revendications

1. Appareil à palier (1) comprenant un arbre rotatif (3) possédant une extrémité d'un trou de lubrification (3A) ouvert dans une surface circonférentielle extérieure (6), un palier coulissant cylindrique (4) supportant de façon rotative l'arbre rotatif (3), et un logement retenant le palier coulissant (4), dans lequel :
un trou débouchant (7) est formé le long d'une direction radiale à une position prédéterminée dans le palier coulissant (4) pour que le trou débouchant (7) coïncide avec la trajectoire de mouvement d'une extrémité du trou de lubrification (3A) lorsque l'arbre rotatif (3) est en rotation ; et
une rainure d'évacuation de particules étrangères (8) est formée dans une surface circonférentielle extérieure (6) du palier coulissant (4),
**caractérisé en ce que** :
- la rainure d'évacuation de particules étrangères (8) conduit au trou débouchant (7) et passe à travers le long d'une direction axiale ; et
- le diamètre intérieur du trou débouchant (7) du palier coulissant (4) est supérieur au diamètre intérieur du trou de lubrification (3A) de l'arbre rotatif (3).

2. Appareil à palier (1) selon la revendication 1, dans lequel le palier coulissant (4) présente la forme d'un cylindre en joignant des surfaces (11A, 12A) d'une paire de demi-paliers (11, 12) ensemble et le trou débouchant (7) est formé au niveau et autour des surfaces de jonction (11A, 12A) des demi-paliers.

3. Appareil à palier (1) selon la revendication 2, dans lequel :
une encoche est formée le long d'une direction axiale dans une surface circonférentielle extérieure (6) de chacun des demi-paliers (11, 12), la surface circonférentielle extérieure (6) étant le bord circonférentiel extérieur de chacune des surfaces de jonction (11A, 12A) ; et
les encoches forment la rainure d'évacuation de particules étrangères (8).

4. Appareil à palier (1) selon la revendication 2, dans lequel :
une rainure linéaire (11B, 12B) s'étendant dans la direction axiale est formée dans la surface circonférentielle extérieure (6) de chacun des demi-paliers (11,12), les rainures linéaires (11B, 12B) étant séparées du bord circonférentiel extérieur des surfaces de jonction ; et
les rainures linéaires (11B, 12B) forment la rainure d'évacuation de particules étrangères (8).

5. Appareil à palier (1) selon la revendication 2, dans lequel :
une portion chanfreinée est formée dans la surface circonférentielle extérieure (6) de chacun des demi-paliers (11,12), la surface circonférentielle extérieure (6) étant le bord circonférentiel extérieur de chacune des surfaces de jonction ; et
les portions chanfreinées forment la rainure d'évacuation de particules étrangères (8).

6. Appareil à palier (1) selon la revendication 1, dans lequel le palier coulissant (4) présente la forme d'un cylindre en joignant des surfaces de jonction (11A, 12A) d'une paire de demi-paliers (11, 12) ensemble, le trou débouchant est formé dans seulement l'un des demi-paliers (11, 12) qui est adjacent aux surfaces de jonction (11A, 12A).

7. Appareil à palier (1) selon la revendication 6, dans lequel le trou débouchant (7) est formé dans l'un des demi-paliers (11, 12), une encoche est formée dans le bord circonférentiel extérieur de la surface de jonction de l'autre des demi-paliers le long de la direction axiale, et l'encoche et l'autre surface de jonction faisant face à l'encoche forment la rainure d'évacuation de particules étrangères (8).

8. Appareil à palier (1) selon la revendication 6, dans lequel le trou débouchant (7) est formé dans l'un des demi-paliers (11, 12), une portion chanfreinée est formée dans le bord circonférentiel extérieur de la surface de jonction de l'autre des demi-paliers le long de la direction axiale, et la portion chanfreinée et l'autre surface de jonction faisant face à la portion chanfreinée forment la rainure d'évacuation de particules étrangères (8).

9. Appareil à palier (1) selon l'une quelconque des revendications 2 à 8, dans lequel :
un relief d'écrasement est formé dans une position dans une surface circonférentielle intérieure (2C) de chacun des demi-paliers (11,12), la position étant adjacente aux surfaces de jonction (11A, 12A) ; et
une portion chanfreinée est formée dans le bord circonférentiel intérieur de chacune des surfaces de jonction.

10. Appareil à palier (1) comprenant un arbre rotatif possédant une extrémité d'un trou de lubrification (3A) ouvert dans une surface circonférentielle extérieure, un palier coulissant cylindrique (4) supportant de façon rotative l'arbre rotatif (3), et un logement retenant le palier coulissant (4) à partir d'un côté circonférentiel extérieur, dans lequel :
le palier coulissant (4) présente la forme d'un cylindre en joignant des surfaces de jonction (11A, 12A) d'une paire de demi-paliers semi-cylindriques (11, 12) ensemble ; et
le trou débouchant (7) est formé dans les surfaces de jonction (11A, 12A), le trou débouchant (7) passant à travers dans une direction radiale, et une rainure d'évacuation de particules étrangères (8) est formée dans une surface circonférentielle intérieure (2C) du logement, la rainure d'évacuation de particules étrangères (8) conduisant à une ouverture (7A) du trou débouchant (7) sur l'autre côté circonférentiel extérieur et passant à travers la surface circonférentielle intérieure (2C) le long d'une direction axiale,
**caractérisé en ce que**
le trou débouchant (7) est formé au centre dans la direction de l'axe du palier coulissant (4), et
la rainure d'évacuation de particules étrangères (8) est formée de façon continue.

11. Appareil à palier (1) selon la revendication 10, dans lequel un relief d'écrasement est formé à une position dans une surface circonférentielle intérieure de chacun des demi-paliers (11, 12), la position étant adjacente aux surfaces de jonction (11A, 12A) ; et une portion chanfreinée est formée dans un bord circonférentiel intérieur de chacune des surfaces de jonction (11A, 12A).
